# EUROPÄISCHE PATENTSCHRIFT

(11) **EP 3 095 075 B1**
(45) Veröffentlichungstag und Bekanntmachung des Hinweises auf die Patenterteilung: **01.03.2023**
(21) Anmeldenummer: 14828443.3
(22) Anmeldetag: 04.12.2014
(51) Int. Cl.: B21D 28/06, B26D 7/02, B26F 1/40, B26F 1/44, G06K 19/077

(54) **VERFAHREN UND EINRICHTUNG ZUR BEARBEITUNG EINES SUBSTRATS**
METHOD AND DEVICE FOR MACHINING A SUBSTRATE
PROCÉDÉ ET DISPOSITIF DE TRAITEMENT D'UN SUBSTRAT

(30) Priorität: 13.01.2014 DE 102014000133
(43) Veröffentlichungstag der Anmeldung: 23.11.2016
(73) Patentinhaber: Melzer Maschinenbau GmbH, 58332 Schwelm (DE)
(72) Erfinder: BAIST, Bernhard, 58285 Gevelsberg (DE)
(74) Vertreter: Döpp, Ludger
(86) Internationale Anmeldenummer: PCT/DE2014/000619
(87) Internationale Veröffentlichungsnummer: WO 2015/104011

(56) Entgegenhaltungen:
- DE-B3-102008 018 491
- DE-C2- 19 634 473

## Beschreibung

Die Erfindung betrifft ein Verfahren zur Bearbeitung eines ebenen, zumindest einlagigen Substrats gemäß gattungsbildendem Teil des ersten Patentanspruchs.

Allgemein bekannt ist, in Substrate Fensteröffnungen einzubringen, die zur Aufnahme von bspw. elektronischen Bauteilen, Chips oder dergleichen dienen. Sofern das Substrat aus mehreren Lagen bestehen sollte, wird in jede einzelne Lage eine entsprechend ausgebildete Öffnung eingebracht, wobei die Lagen anschließend zueinander positioniert werden. Durch Bearbeitungsungenauigkeiten gegebene Toleranzen können bewirken, dass das Einlegen des Bauteils in die jeweilige Öffnung erschwert wird. Dies macht insbesondere bei der Herstellung von Karten Probleme.

Durch die DE 10 2008 018 491 B3 ist ein Verfahren zum Implantieren eines Chipmoduls in einen Chipkartenkörper bekannt geworden, umfassend die Schritte
- Zuführen des Chipmoduls auf einem Modulband
- Ausstanzen des Chipmoduls mittels eines Stanzstempels auf dem Modulband
- Einsetzen und dauerhaftes Fixieren des Chipmoduls in einer Kavität des Chipkartenkörpers.

Beim Schritt des Zuführens des Chipmoduls auf dem Modulband wird das Modulband zwischen dem Stanzstempel und dem Chipkartenkörper hindurchgeführt, wobei der Schritt des Einsetzens des Chipmoduls in die Kavität des Chipkartenkörpers mittels des Stanzstempels erfolgt.

Die DE 196 20 597 C2 betrifft eine Vorrichtung zur unterschiedlichen Bearbeitung aufeinanderfolgender Abschnitte von Lagematerial, wie Papier oder dergleichen, an einer Hubeinrichtung im Bereich von Bearbeitungsstellen, mit einer Vorrichtungsbasis sowie einer daran gelagerten Hubeinrichtung, die mit einem Hubantrieb anzutreiben ist, mit mindestens zwei gesonderten ersten und zweiten Werkzeugeinheiten, die gesonderte Werkzeuge, wie Hubstempel zur Lochung oder dergleichen, enthalten und in Betriebszustände umsteuerbar sind, nämlich im Bearbeitungsbetrieb das Lagenmaterial bearbeiten und in einem Ruhezustand keine Bearbeitung ausführen, sowie mit einer eine Laufrichtung und eine Lagenebene bestimmenden Führung für das Lagenmaterial, wobei die Werkzeugeinheiten quer zur Laufrichtung nebeneinander angeordnet sind.

Der DE 196 34 473 C2 ist ein Verfahren zur Herstellung von Chipträgern, insbesondere Chipkarten, zu entnehmen, bei dem ausgehend von endlos als Rollenmaterial oder als Bogenmaterial geführten Basissubstratmaterial die Einbringung einer Fensteröffnung in das Basissubstratmaterial und nachfolgend die Belegung des Basissubstratmaterials mit einem Decklagenmaterial und die Bestückung des Basissubstratmaterials in einer Bestückungsstation erfolgt und bei dem das Basissubstratmaterial, in der der Bestückungsstation mit einem Chipmodul bestückt wird, derart dass das Chipmodul von der Fensteröffnung aufgenommen wird.

BRPI0505689-6 A offenbart eine Vorrichtung für ein System für automatisierte Einlegearbeit an laminierten Holzfußböden. Die WO2015/090956 A1 und die EP2886267 A1 offenbaren ein Verfahren und eine Vorrichtung für das Einbringen eines Einlegeteils in eine Aussparung, die in einem Folienprodukt gebildet ist gemäß dem Oberbegriff des Anspruchs 1 und eine Einrichtung gemäß dem Oberbegriff des Anspruchs 8.

Der Erfindung liegt die Aufgabe zugrunde, ein einfacheres Verfahren und eine einfachere Einrichtung zur Bearbeitung eines ebenen, zumindest einlagigen Substrats bereitzustellen, mittels welchem eine positionsgenaue Einbringung eines Füllmaterials in eine zuvor erzeugte Öffnung innerhalb des Substrats möglich ist.

Die Aufgabe wird durch die Merkmale des unabhängigen Anspruchs 1 gelöst.

Vorteilhafte Weiterbildungen des Erfindungsgegenstandes sind den zugehörigen verfahrensgemäßen Unteransprüchen zu entnehmen.

Diese Aufgabe wird zusätzlich bei einer Einrichtung zur Bearbeitung eines ebenen, zumindest einlagigen Substrats gemäß Anspruch 8 gelöst.

Vorteilhafte Weiterbildungen der erfindungsgemäßen Einrichtung sind den zugehörigen gegenständlichen Unteransprüchen zu entnehmen.

Das aus dem Füllmaterial ausgestanzte Element wird vorteilhafterweise durch Klemmung innerhalb der Öffnung, insbesondere des Fensters, des zumindest einlagigen Substrats gehalten.

Die Zuordnung des Substrats zum Füllmaterial innerhalb des Bearbeitungswerkzeugs kann wie folgt realisiert werden:
- das Substrat und das Füllmaterial können mit vorgebbarem Abstand parallel zueinander durch das Bearbeitungswerkzeug hindurchgeführt werden
- das Substrat und das Füllmaterial können mit vorgebbarem Abstand in beliebigem Winkel, vorzugsweise rechtwinklig zueinander durch das Bearbeitungswerkzeug hindurchgeführt werden.

Einem weiteren Gedanken der Erfindung gemäß werden das Substrat und das Füllmaterial intermittierend durch das Bearbeitungswerkzeug hindurchgeführt.

Substrat und Füllmaterial bestehen in der Regel aus unterschiedlichen Materialien. Je nach späterem Verwendungszweck kann es sinnvoll sein, das Füllmaterial aus einem transparenten Material herzustellen, so dass der Bereich der Öffnung durchscheinend ist.

Von Vorteil für den Erfindungsgegenstand ist, wenn das Substrat mehrlagig ausgebildet wird, wobei sämtliche Lagen vor Einbringung der jeweiligen Öffnung im Bereich des Bearbeitungswerkzeugs positioniert und gehalten werden und das Element im Verlauf der Bearbeitung dergestalt innerhalb der gemeinsamen Öffnung platziert wird, dass es klemmenden Kontakt zumindest mit einer der Lagen des mehrlagigen Substrats hat.

Die Einrichtung beinhaltet insbesondere mehrere, im Bereich des Bearbeitungswerkzeugs vorgesehene Schneid- und Führungsplatten, um die entsprechenden Bearbeitungsschritte, nämlich Erzeugen der Öffnung in dem zumindest einlagigen Substrat, Ausstanzen des Elements aus dem Füllmaterial sowie Einsetzen des Elements in die Öffnung des Substrats, realisieren zu können, da diese Vorgänge auf unterschiedlichen Ebenen durchgeführt werden.

Innerhalb des Bearbeitungswerkzeugs sind, einem weiteren Gedanken der Erfindung gemäß, mehrere Klemmelemente vorgesehen, die das zumindest einlagige Substrat im Verlauf seiner Bearbeitung positionieren und halten. Dies ist dann besonders vorteilhaft, wenn das Substrat aus mehreren Lagen besteht und keine Bearbeitungstoleranzen innerhalb der einzelnen Lagen des Substrats erwünscht sind, so dass das Element problemlos in der gemeinsamen Öffnung des mehrlagigen Substrats in klemmender Weise eingebracht werden kann.

Die Klemmelemente werden bevorzugt pneumatisch betätigt. Innerhalb des Bearbeitungswerkzeugs ist mindestens ein relativ zum Substrat bewegbarer Ambossstreifen vorgesehen, der als Widerlager bei der Einbringung des Elements in die Öffnung des Substrats dient. Auch der Ambossstreifen kann bedarfsweise pneumatisch betätigt werden.

Einem weiteren Gedanken der Erfindung gemäß ist das Bauteil als kommt ein Stanzstempel zum Einsatz, der sowohl die Öffnung im Substrat erzeugt als auch das Element aus dem Füllmaterial herausschneidet und selbiges in die Öffnung des Substrats einsetzt.

Der Erfindungsgegenstand ist anhand eines Ausführungsbeispiels in der Zeichnung dargestellt und wird wie folgt beschrieben. Es zeigen:
- Fig. 1: Prinzipskizze der erfindungsgemäßen Einrichtung;
- Figuren 2 bis 7: Einrichtung gemäß Figur 1 in unterschiedlichen Bearbeitungspositionen.

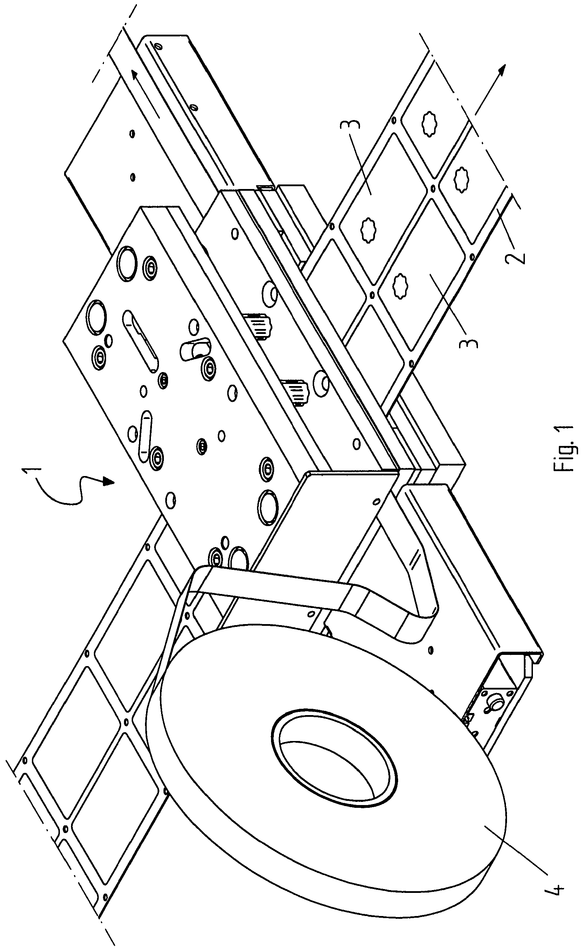

Figur 1 zeigt als Prinzipskizze die erfindungsgemäße Einrichtung.

Erkennbar ist ein mehrteiliges Bearbeitungswerkzeug 1, dessen wesentliche Bauteile in den folgenden Figuren näher beschrieben werden.

Durch das Bearbeitungswerkzeug 1 hindurchgeführt wird einerseits ein zumindest einlagiges bandförmiges Substrat 2, das in diesem Beispiel zwei nebeneinander angeordnete Nutzen 3 beinhalten soll. Das Substrat 2 kann auch bahn- oder streifenförmig mit beliebiger Anzahl von Nutzen ausgebildet werden. Ein aufgewickeltes ebenfalls bandförmig ausgebildetes Füllmaterial 4 wird in diesem Beispiel rechtwinklig zum Substrat 2 auf einer anderen Ebene durch das Bearbeitungswerkzeug 1 hindurchgeführt. Je nach Ausgestaltung des Bearbeitungswerkzeugs 1 bzw. der gesamten Bearbeitungsmaschine kann das Füllmaterial 4 auch parallel zum Substrat 2, ober- oder unterhalb des Substrats 2, durch das Bearbeitungswerkzeug 1 hindurchgeführt werden.

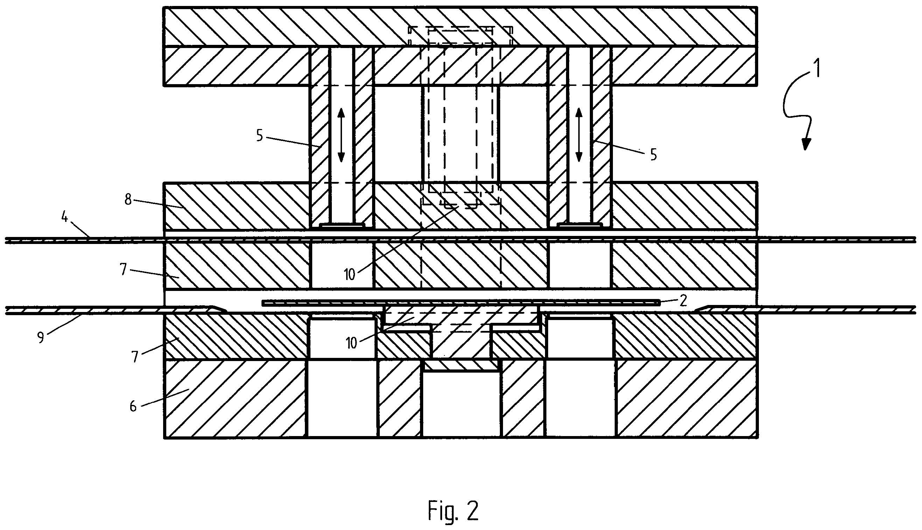

Die Figuren 2 bis 7 zeigen unterschiedliche Bearbeitungszustände des Substrats 2, respektive des Füllmaterials 4. Das Bearbeitungswerkzeug 1 zeigt folgende Elemente/Bauteile: das Substrat 2, das Füllmaterial 4, einen Stanzstempel 5, eine Grundplatte 6, zwei Schneid- und Führungsplatten 7,8, bewegbare Ambossstreifen 9 sowie Klemmelemente 10.

In Figur 2 ist erkennbar, dass der Stanzstempel 5 innerhalb des Bearbeitungswerkzeug 1 in einer Position angeordnet ist, die eine freie Bewegbarkeit sowohl des Substrats 2 als auch des Füllmaterials 4 innerhalb des Bearbeitungswerkzeugs 1 erlaubt.

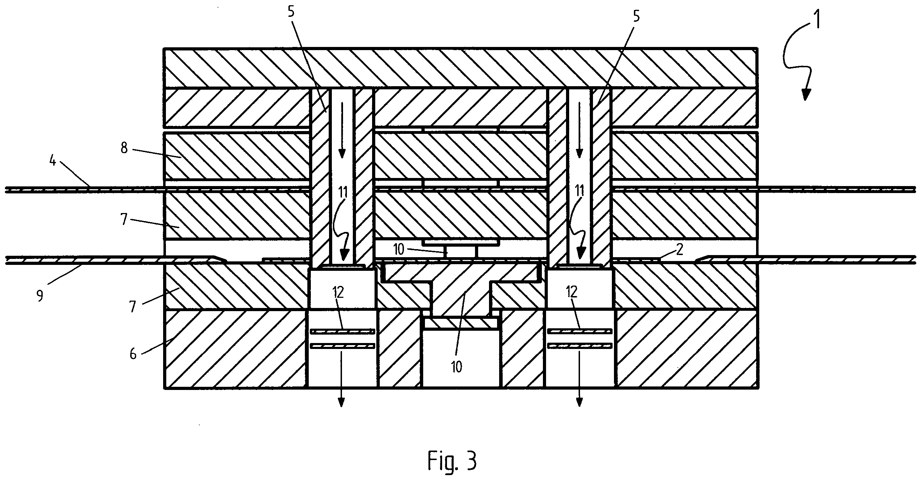

Figur 3 zeigt den ersten Arbeitshub des Stanzstempels 5. Selbiger schneidet aus dem Füllmaterial 4 ein der Kontur des Stanzstempels 5 entsprechendes Element 12 aus. Im weiteren Hub erzeugt der Stanzstempel 5 innerhalb des Substrats 2 eine fensterartig ausgebildete Öffnung 11 und drückt das nicht weiter dargestellte, aus dem Füllmaterial 4 ausgestanzte Element 12 durch die erzeugte Öffnung 11 hindurch, so dass es nach unten durchfallen kann. Zu Bearbeitungszwecken wird das Substrat 2 innerhalb des Bearbeitungswerkzeugs durch die Klemmelemente 10 positioniert und gehalten. Dieser Hub findet im weiteren Bearbeitungsschritt lediglich ein einziges Mal statt. Gleiches gilt für das Einführen eines neuen Substrats 2, respektive Füllmaterials 4, in das Bearbeitungswerkzeug 1.

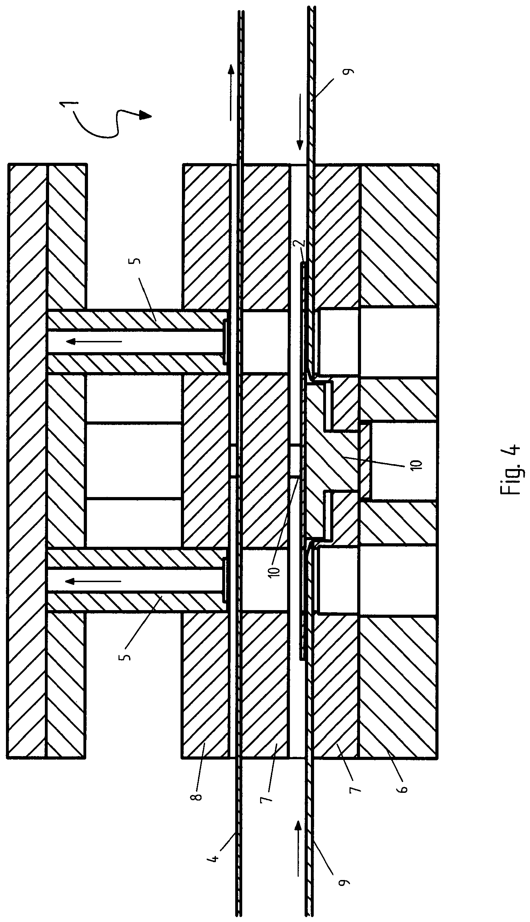

Figur 4 zeigt, dass der Stanzstempel 5 nun wieder in einer Position ist, die außerhalb des oberhalb des Substrats 2 gelegenen Füllmaterials 4 liegt. In dieser Position wird der Ambossstreifen 9 unter das Substrat 2 geschoben, wobei das Substrat 2 weiterhin durch die Klemmelemente 10 fixiert wird.

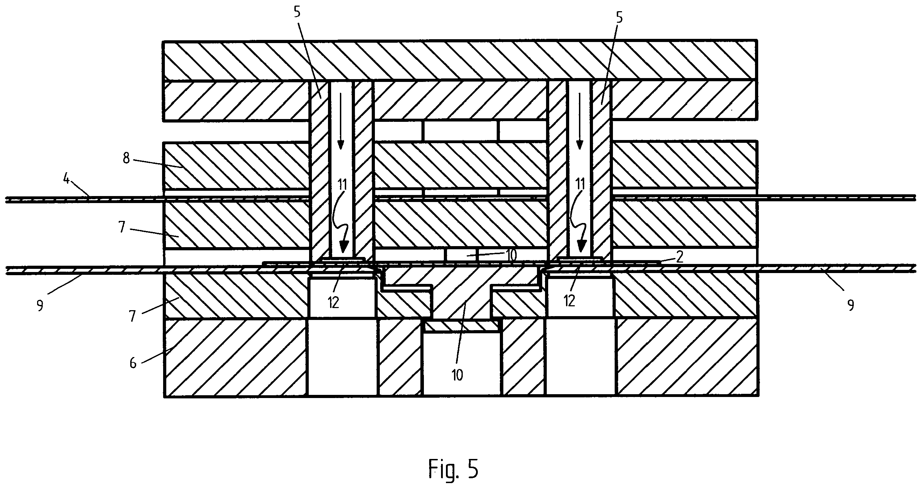

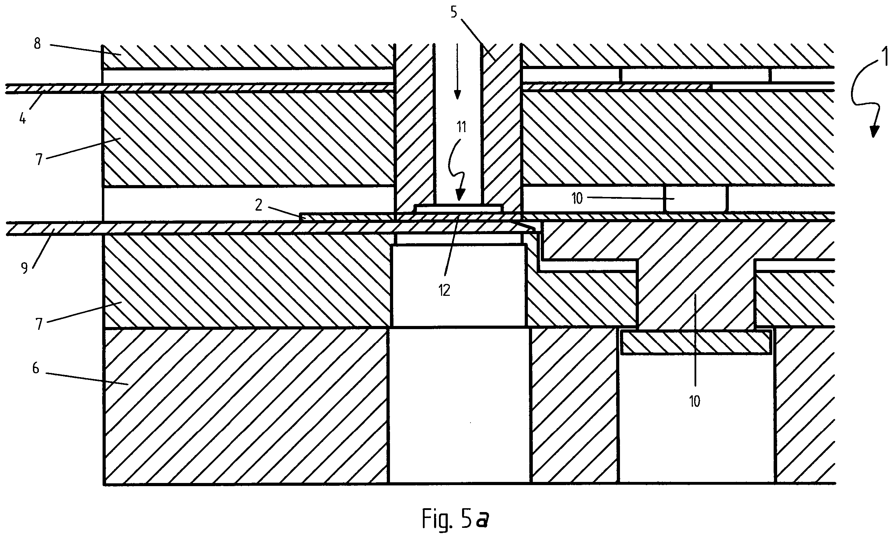

Figur 5 zeigt eine Bearbeitungsposition, in der der Stanzstempel 5 aus dem Füllmaterial 4 ein Element 12 herausschneidet und selbiges in die zuvor erzeugte Öffnung 11 innerhalb des Substrats 2 einsetzt, so dass das Element 12 in klemmendem Kontakt mit dem Substrat 2 gehalten wird. Der Stanzstempel 5 wird hierbei so weit auf das Substrat 2 zubewegt, dass der Ambossstreifen 9 verhindert, dass das Element 12 durch die Öffnung 11 im Substrat 2 hindurchgedrückt wird.

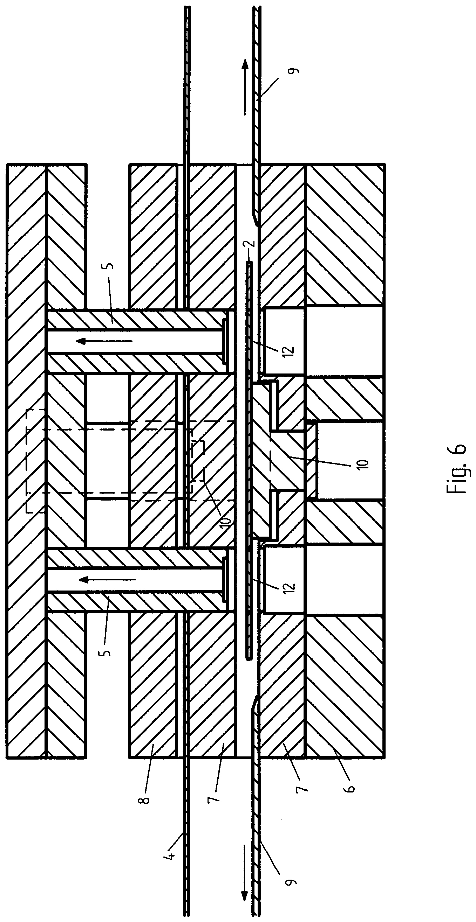

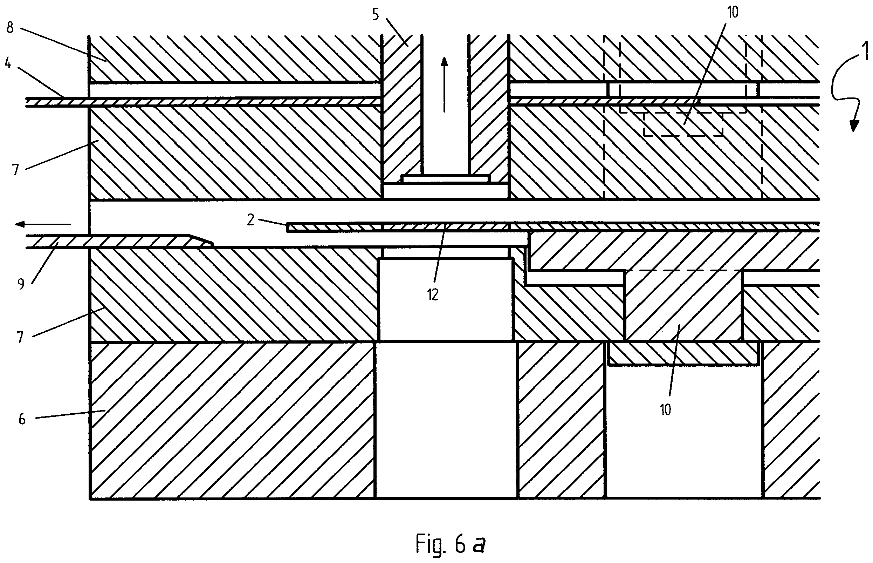

Figur 6 zeigt eine Bearbeitungsposition, in der das Substrat 2 in Transportrichtung weiterbewegt werden kann, während der Stanzstempel 5 in einer Position gehalten wird, in der das Füllmaterial 4 nicht transportiert werden kann. Die Klemmung des Substrats 2 ist in Figur 6 aufgehoben und der Ambossstreifen 9 ist in seine Ausgangsposition zurückbewegt worden.

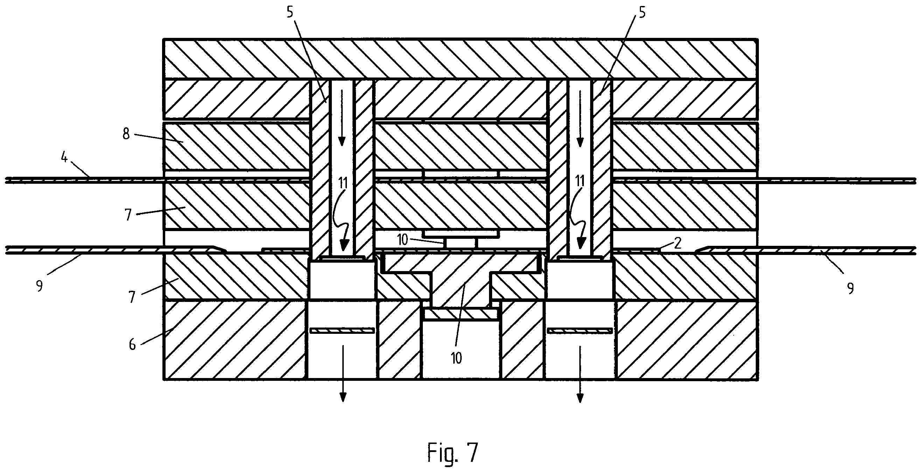

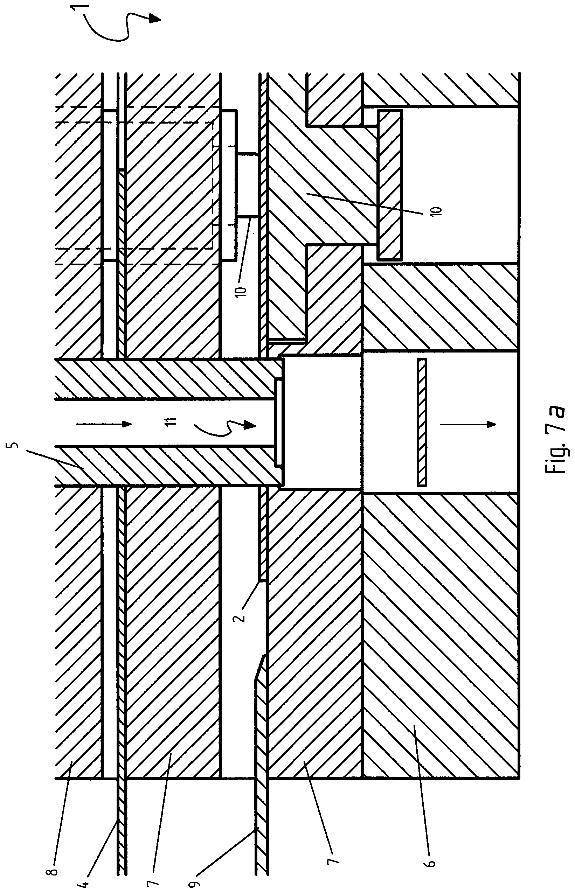

Figur 7 zeigt einen Folgearbeitsschritt, indem aus dem wiedergeklemmten Substrat 2 eine weitere Öffnung 11 ausgeschnitten wird. Im intermittierenden Betrieb schließt sich dann für die weitere Bearbeitung des Substrats die Darstellung in Figur 4 wieder an.

## Patentansprüche

1. Verfahren zur Bearbeitung eines ebenen, zumindest einlagigen Substrats (2), indem das als Streifen, Bahn oder Bogen ausgebildete Substrat (2) gemeinsam mit einem streifen-, bahn- oder bogenförmigen Füllmaterial (4) auf unterschiedlichen Ebenen durch mindestens ein Bearbeitungswerkzeug (1) hindurchgeführt wird und das Substrat (2) insbesondere im Bereich des Bearbeitungswerkzeugs (1) positioniert und gehalten wird, mindestens ein Stanzstempel (5) des Bearbeitungswerkzeugs (1) an vorgebbarer Stelle des Substrats (2) eine Öffnung (11), insbesondere ein Fenster, erzeugt, der Stanzstempel (5) anschließend in einen Bereich außerhalb der Öffnung (11) bewegt wird und in einem weiteren Hub aus dem Füllmaterial (4) durch den Stanzstempel (5) des Bearbeitungswerkzeugs (1) ein dem Querschnitt der Öffnung (11) entsprechendes Element (12) ausgestanzt, durch den Stanzstempel (5) in Richtung der Öffnung (11) des fixierten Substrats (2) bewegt und das Element (12) durch den Stanzstempel (5) in die Öffnung (11) des Substrats (2) eingesetzt wird, **dadurch gekennzeichnet, dass** beim ersten Arbeitshub des Stanzstempels (5) selbiger aus dem Füllmaterial (4) ein der Kontur des Stanzstempels (5) entsprechendes Element (12) ausschneidet, im weiterem Hub der Stanzstempel (5) innerhalb des Substrats (2) eine fensterartig ausgebildete Öffnung (11) erzeugt und das aus dem Füllmaterial (4) ausgestanzte Element (11) durch die erzeugte Öffnung (11) hindurch drückt, so dass es nach unten durchfallen kann, wobei dieser Hub im weiteren Bearbeitungsschritt lediglich ein einziges Mal stattfindet und gleiches für das Einführen eines neuen Substrats (2), respektive Füllmaterials (4) in das Bearbeitungswerkzeug (1) gilt.

2. Verfahren nach Anspruch 1, **dadurch gekennzeichnet, dass** das Element (12) durch Klemmung innerhalb der Öffnung (11), insbesondere des Fensters, des Substrats (2), gehalten wird.

3. Verfahren nach Anspruch 1 oder 2, **dadurch gekennzeichnet, dass** das Substrat (2) und das Füllmaterial (4) mit vorgebbarem Abstand parallel zueinander durch das Bearbeitungswerkzeug (1) hindurchgeführt werden.

4. Verfahren nach Anspruch 1 oder 2, **dadurch gekennzeichnet, dass** das Substrat (2) und das Füllmaterial (4) mit vorgebbarem Abstand in beliebigem Winkel, vorzugsweise rechtwinklig zueinander durch das Bearbeitungswerkzeug (1) hindurchgeführt werden.

5. Verfahren nach einem der Ansprüche 1 - 4, **dadurch gekennzeichnet, dass** das Substrat (2) und das Füllmaterial (4) intermittierend durch das Bearbeitungswerkzeug (1) hindurchgeführt werden.

6. Verfahren nach einem der Ansprüche 1 - 5, **dadurch gekennzeichnet, dass** das Füllmaterial (4) aus einem transparenten Werkstoff gebildet wird.

7. Verfahren nach einem der Ansprüche 1 - 6, **dadurch gekennzeichnet, dass** das Substrat (2) mehrlagig ausgebildet wird, wobei sämtliche Lagen vor Einbringung der jeweiligen Öffnung (11) im Bereich des Bearbeitungswerkzeugs (1) fixiert werden und das Element (12) im Verlauf der Bearbeitung dergestalt innerhalb der gemeinsamen Öffnung (11) platziert wird, das es klemmenden Kontakt zumindest mit einer der Lagen des mehrlagigen Substrats (2) hat.

8. Einrichtung zur Bearbeitung eines ebenen, zumindest einlagigen Substrats (2) zur Durchführung des Verfahrens gemäß einem der Ansprüch 1 bis 7, mit einem, mindestens einen Stanzstempel (5) beinhaltenden, Bearbeitungswerkzeug, einer ersten Führungs- und Transporteinrichtung für das streifen-, bahn- oder bogenförmig ausgebildete Substrat (2), einer zweiten Führungs- und Transporteinrichtung für ein streifen-, bahn- oder bogenförmig ausgebildetes Füllmaterial (4), wobei die erste und die zweite Führungs- und Transporteinrichtung auf unterschiedlichen Ebenen angeordnet sind, wobei der Stanzstempel (5) dergestalt relativ zum Substrat (2) sowie zum Füllmaterial (4) bewegbar ist, dass ein aus dem Füllmaterial (4) ausgeschnittenes Element (12) in eine zuvor in das Substrat (2) eingebrachte Öffnung (11) durch den Stanzstempel (5) einsetzbar ist, **dadurch gekennzeichnet, dass** das Bearbeitungswerkzeug (1) mehrere Schneid- und Führungsplatten (7,8) beinhaltet und, dass innerhalb des Bearbeitungswerkzeugs (1) Klemmelemente (10) vorgesehen sind, die das Substrat (2) im Verlauf seiner Bearbeitung positionieren und halten.

9. Einrichtung nach Anspruch 8, **dadurch gekennzeichnet, dass** die Klemmelemente (10) pneumatisch betätigbar sind.

10. Einrichtung nach Anspruch 8 oder 9, **dadurch gekennzeichnet, dass** innerhalb des Bearbeitungswerkzeugs (1) mindestens ein, relativ zum Substrat (2) bewegbarer, Ambossstreifen (9) vorgesehen ist, der als Widerlager bei der Einbringung des Elements (12) in die Öffnung (11) des Substrats (2) vorgesehen ist.

11. Einrichtung nach einem der Ansprüche 8 bis 10, **dadurch gekennzeichnet, dass** der Ambossstreifen(9) pneumatisch betätigbar ist.

12. Einrichtung nach einem der Ansprüche 8 bis 11, **dadurch gekennzeichnet, dass** der Stanzstempel (5) sowohl die jeweilige Öffnung (11) im Substrat (2) erzeugt als auch das Element (12) aus dem Füllmaterial (4) herausschneidet und selbiges in die Öffnung (11) des Substrats (2) einsetzt.

## Claims

1. A method for processing a flat, at least single-layer substrate (2) by guiding the substrate (2) designed as a strip, web or sheet together with a strip-, web- or arc-shaped filling material (4) at different levels through at least one machining tool (1) and by positioning and holding the substrate (2), in particular, in the region of the machining tool (1), by at least one punch (5) of the machining tool (1) creating an opening (11), in particular, a window, at a specifiable area of the substrate (2), thereby moving the punch (5) into a region outside of the opening (11) and then, in another stroke, the punch (5) of the machining tool (1) punching out an element (12) corresponding to the cross-section of the opening (11) from the filling material (4), moving it via the punch (5) in the direction of the opening (11) of the fixed substrate and inserting the element (12) via the punch (5) into the opening (11) of the substrate (2), **characterized in that**, during the first operating stroke of the punch (5), it cuts out of the filling material (4) an element (12) corresponding to the contour of the punch (5), in another stroke, the punch (5) creates a window-like opening (11) within the substrate (2) and presses the element (11) punched out of the filling material (4) through the opening (11) created in such a way that it can fall through in a downwards direction, wherein this stroke only takes place a single time during another processing step and the same applies for inserting a new substrate (2), or rather the filling material (4), into the machining tool (1).

2. The method according to Claim 1, **characterized in that** the element (12) is held within the opening (11), in particular, of the window, of the substrate (2), by clamping.

3. The method according to Claim 1 or 2, **characterized in that** the substrate (2) and the filling material (4) are passed through the machining tool (1) parallel to each other at a specifiable distance.

4. The method according to Claim 1 or 2, **characterized in that** the substrate (2) and the filling material (4) are passed through the machining tool (1) at a specifiable distance at any angle, preferably perpendicular to one another.

5. The method according to any one of the Claims 1-4, **characterized in that** the substrate (2) and the filling material (4) are passed intermittently through the machining tool (1).

6. The method according to any one of the Claims 1-5, **characterized in that** the filling material (4) is made of a transparent material.

7. The method according to any one of the Claims 1-6, **characterized in that** the substrate (2) is formed in several layers, wherein all layers are fixed before insertion of the respective opening (11) within the region of the machining tool (1), and the element (12) is placed in such a way within the common opening (11) during the course of processing that it makes clamping contact with at least one of the layers of the multilayer substrate (2).

8. Device for processing a flat, at least single-layer substrate (2) for carrying out the method according to one of the Claims 1 to 7, with a machining tool comprising at least one punch (5), a first guide and transport device for the strip-, web- or arc-shaped substrate (2), a second guide and transport device for a strip-, web- or arc-shaped filling material (4), wherein the first and the 'second guide and transport device are arranged at different levels, wherein the punch (5) can be moved with relation to the substrate (2) and to the filling material (4) in such a way that an element (12) cut out of the filling material (4) can be inserted via the punch (5) into an opening (11) previously introduced into the substrate (2), **characterized in that** the machining tool (1) comprises a plurality of cutting and guide plates (7, 8) and that, within the machining tool (1), clamping elements (10) are provided, which position and hold the substrate (2) during the course of the machining thereof.

9. The device according to Claim 8, **characterized in that** the clamping elements (10) are pneumatically actuatable.

10. The device according to Claim 8 or 9, **characterized in that**, within the machining tool (1), at least one anvil strip (9) is provided, which can be moved relative to the substrate (2) and is provided as an abutment when introducing the element (12) into the opening (11) of the substrate (2).

11. The device according to any one of the Claims 8 to 10, **characterized in that** the anvil strip (9) is pneumatically actuatable

12. The device according to any one of the Claims 8 to 11, **characterized in that** the punching die (5) creates both the respective opening (11) in the substrate (2) and cuts out the element (12) from the filling material (4) and inserts the same into the opening (11) of the substrate (2) as well.

## Revendications

1. Procédé, destiné à usiner un substrat (2) plan au moins monocouche, en ce que l'on fait passer un substrat conçu sous la forme d'un ruban, d'une bande ou d'une feuille (2), conjointement avec une matière de remplissage (4) en forme de ruban, de bande ou de feuille dans différents plans à travers au moins un outil d'usinage (1) et en ce que l'on positionne et l'on maintient le substrat (2), notamment dans la zone de l'outil d'usinage (1), en ce qu'au moins un poinçon de découpage (5) de l'outil d'usinage (1) créé sur un endroit non prédéfinissable du substrat (2) une ouverture (11), notamment une fenêtre, en ce que l'on déplace par la suite le poinçon de découpage (5) dans une zone extérieure à l'ouverture (11) et en ce que dans une course suivante, il est découpé dans la matière de remplissage (4) par le poinçon de découpage (5) de l'outil d'usinage (1) un élément (12) correspondant à la section transversale de l'ouverture (11), déplacé par le poinçon de découpage (5) en direction de l'ouverture (11) du substrat (2) fixé et en ce que l'élément (12) est inséré par le poinçon de découpage (5) dans l'ouverture (11) du substrat (2), **caractérisé en ce que** lors de la première course de travail du poinçon de découpage (5), celui-ci découpe dans la matière de remplissage (4) un élément (12) correspondant au contour du poinçon de découpage (5), dans la course suivante du poinçon de découpage (5), il créé à l'intérieur du substrat (2) une ouverture (11) conçue à la manière d'une fenêtre, et presse l'élément (11) découpé dans la matière de remplissage (4) à travers l'ouverture (11) créée, de sorte qu'il puisse tomber vers le bas, ladite course n'ayant lieu qu'une unique fois pendant l'étape de travail suivante et la même chose s'appliquant pour l'introduction d'un nouveau substrat (2), respectivement de la nouvelle matière de remplissage (4) dans l'outil d'usinage (1).

2. Procédé selon la revendication 1, **caractérisé en ce que** l'élément (12) est maintenu par serrage du substrat (2) à l'intérieur de l'ouverture (11), notamment de la fenêtre.

3. Procédé selon la revendication 1 ou 2, **caractérisé en ce que** l'on fait passer le substrat (2) et la matière de remplissage (4) avec un écart prédéfinissable, à la parallèle l'un de l'autre à travers l'outil d'usinage (1) .

4. Procédé selon la revendication 1 ou 2, **caractérisé en ce que** l'on fait passer le substrat (2) et la matière de remplissage (4) avec un écart prédéfinissable, sous un angle quelconque, de préférence à angle droit l'un par rapport à l'autre à travers l'outil d'usinage (1).

5. Procédé selon l'une quelconque des revendications 1 à 4, **caractérisé en ce que** l'on fait passer le substrat (2) et la matière de remplissage (4) par intermittence à travers l'outil d'usinage (1).

6. Procédé selon l'une quelconque des revendications 1 à 5, **caractérisé en ce que** l'on constitue la matière de remplissage (4) en un matériau transparent.

7. Procédé selon l'une quelconque des revendications 1 à 6, **caractérisé en ce que** l'on créé le substrat (2) en plusieurs couches, l'ensemble des couches étant fixé avant l'introduction de l'ouverture (11) concernée dans la zone outil d'usinage (1) et au cours de l'usinage, l'élément (12) étant placé à l'intérieur de l'ouverture (11) commune, de sorte qu'il soit en contact par serrage avec au moins l'une des couches du substrat (2) multicouches.

8. Dispositif, destiné à usiner un substrat (2) plan au moins monocouche, pour réaliser le procédé selon l'une quelconque des revendications 1 à 7, à l'aide d'un outil d'usinage comprenant au moins un poinçon de découpage (5), d'un premier dispositif de guidage et de transport du substrat (2) conçu en forme de ruban, de bande ou de feuille, d'un deuxième dispositif de guidage et de transport pour une matière de remplissage (4) conçue en forme de ruban, de bande ou de feuille, le premier et le deuxième dispositifs de guidage et de transport étant placés sur différents plans, le poinçon de découpage (5) étant déplaçable par rapport au substrat (2), ainsi que par rapport à la matière de remplissage (4), de telle sorte qu'un élément (12) découpé dans la matière de remplissage (4) soit insérable par le poinçon de découpage (5) dans une ouverture (11) précédemment ménagée dans le substrat (2), **caractérisé en ce que** l'outil d'usinage (1) comprend plusieurs plaquettes de coupe et de guidage (7,8), et **en ce qu'**à l'intérieur de l'outil d'usinage (1) sont prévus des éléments de serrage (10), qui positionnent et maintiennent le substrat (2) au cours de son usinage.

9. Dispositif selon la revendication 8, **caractérisé en ce que** les éléments de serrage (10) sont actionnables par moyen pneumatique.

10. Dispositif selon la revendication 8 ou 9, **caractérisé en ce qu'**à l'intérieur de l'outil d'usinage (1) est prévue au moins une bande d'enclume (9) déplaçable par rapport au substrat (2), qui est prévue en tant que butée lors de l'introduction de l'élément (12) dans l'ouverture (11) du substrat (2).

11. Dispositif selon l'une quelconque des revendications 8 à 10, **caractérisé en ce que** la bande d'enclume (9) est actionnable par moyen pneumatique.

12. Dispositif selon l'une quelconque des revendications 8 à 11, **caractérisé en ce que** le poinçon de découpage (5) créé aussi bien l'ouverture (11) respective dans le substrat (2) qu'il découpe également l'élément (12) dans la matière de remplissage (4) et insère celui-ci dans l'ouverture (11) du substrat (2).
